# EUROPEAN PATENT APPLICATION

(11) **EP 3 043 585 A1**
(43) Date of publication of application: **13.07.2016**
(21) Application number: 16150912.0
(22) Date of filing: 12.01.2016
(51) Int. Cl.: H04W 12/04, H04L 29/06

(54) **SYSTEMS AND METHODS FOR PROVIDING IOT SERVICES**

(30) Priority: 12.01.2015 US 201514595190
(71) Applicant: Verisign, Inc., Reston, VA 20190 (US)
(72) Inventor: Yacoub, Souheil, Reston VA, 20190 (US); Piccand, Regis, Reston VA, 20190 (US); Schonfeld, Daniel, Reston VA, 20190 (US); James, Stephen, Reston VA, 20190 (US); Fregly, Andrew, Reston VA, 20190 (US)
(74) Representative: Fontenelle, Sandrine

(57) **Abstract**

Provided is a method for subscribing to a data feed from an internet of things ("IoT") device (105). The method comprises obtaining, by a subscribe application program interface ("API") (135) of a container (115), a subscription request to subscribe to the data feed from a requestor (140), wherein the container (115) is operable to provide one or more services to an internet of things ("IoT") device (105) through one or more application programming interfaces ("APIs"), wherein subscription request is associated with data stored in one or more domain name system ("DNS") records; determining that the subscription request is permissible based on a list of approved requestors (140); and providing the data feed to the requestor (140), wherein the requestor (140) is another container (115) or another IoT device (105).

## Description

### BACKGROUND

The use of the Internet for purposes that extend beyond the current model of Web browsers interacting with Websites is growing rapidly. In particular, many devices are now being exposed on the Internet so as to enable interactions with those devices from devices and applications that are also connected to the Internet. As a result of this increasing usage of the Internet for interaction with connected devices, commonly called the Internet of Things (IOT), there is a growing demand for technology that provides a set of commonly needed capabilities for applications that involve Internet connected devices. IOT applications have need for communication and data infrastructure that simplifies the discovery of IOT devices and use of data that is communicated in interactions with IOT devices. These capabilities need to be provided securely in a way that protects the privacy of the data being exchanged in the interactions.

### SUMMARY

In some aspects, a method for subscribing to a data feed from an internet of things ("IoT") device is disclosed. The method can comprise obtaining, by a subscribe application program interface ("API") of a container, a subscription request to subscribe to the data feed from a requestor, wherein the container is operable to provide one or more services to an internet of things ("IoT") device through one or more application programming interfaces ("APIs"), wherein subscription request is associated with data stored in one or more domain name system ("DNS") records; determining that the subscription request is permissible based on a list of approved requestors; and providing the data feed to the requestor, wherein the requestor is another container or another IoT device.

The one or more services can comprise a message bus service operable to receive and provide message to requestor or another requestor, a data service operable to process data received from the IoT device, a data transformer service operable to transform data from the IoT device from one state to another state, and an administrative service operable to maintain information on valid users of the data feed.

The data feed can be provided to the requestor on a predetermined schedule. The data feed can be obtained by the requestor on a predetermined schedule.

In some aspects, a method for registering a container with a domain name system ("DNS") is disclosed. The method can comprise creating a container, wherein the container is operable to provide one or more services to an internet of things ("IoT") device through one or more application programming interfaces ("APIs"); providing a registration request to register the container to a registration server of the DNS, wherein the registration request comprises an unique identifier for the container; and obtaining an internet protocol ("IP") address and a domain name associated with the unique identifier for the container from the registration server.

The one or more services can comprise one or more of: a registry server, a data service, a DNS server service, and a messaging service.

The one or more APIs can comprise an account API, a crawler API, a consume API, a publish API.

The data service can comprises one or more of: a data transformer, a data aggregator, a data average.

The method can further comprise providing a public key of an asymmetric key pair associated with the container to the DNS.

The method can further comprise obtaining a subscription request from a requestor for a data feed managed by the container; determining that the subscription request from the requestor is permissible based on a record of permissible requestors; providing the data feed to the requestor.

The requestor can be another container or another IoT device.

The method can further comprise obtaining a data feed from the IoT device.

The crawler API can be operable to communicate with other containers.

In some aspects, a method for subscribing to a container is disclosed. The method can comprise registering a first and a second internet of things ("IoT") device with the container, wherein the container is operable to provide one or more services to the IoT device through one or more application programming interfaces ("APIs"); obtaining a first data feed from the first IoT device; obtaining a second data feed from the second IoT device; obtaining a request for the second data feed to subscribe to the first data feed; obtaining a subscription request from the second IoT device, wherein the subscription request is digitally signed using a private key associated with the second IoT device; obtaining an answer to the subscription request from the first IoT device; adding the first data feed to the second data feed based on the answer; and obtaining a subscription acknowledgement from the first IoT.

The method can further comprise providing metadata associated to the first and/or second IoT device to another container.

In some aspects, a method for creating a verified data stream is disclosed. The method can comprise generating, by an IoT device, a public/private key pair; transforming an identifier of the IoT device into a qualified name; providing the public key to be published in a DNSSEC secured zone under the qualified name; and generating a data stream including a message that is digitally signed using the private key, wherein the message includes a feed identifier and a payload.

In some aspects, a method for authenticating a data stream is disclosed. The method can comprise obtaining a message from a container, wherein the message is digitally signed using a private key of an IoT device that created the message, wherein the message includes a feed identifier and a payload, and wherein the container is operable to provide one or more services to the IoT device through one or more application programming interfaces ("APIs"); extracting the feed identifier from the message, transforming the feed identifier into a device identifier; transforming the device identifier into a qualified name; obtaining, from a DNS record, a public key associated with the private key; and authenticating the message using the public key.

In some aspects, a method for searching for IoT devices is disclosed. The method comprise obtaining, at a DNS resolver from a requestor, a DNS query for an IP address of an IoT device; determining, by the DNS resolver, that the DNS query is intended for resolution via a search engine instead of a DNS server based on a characteristic of the DNS query; forming a search query based on the DNS query for submission to a search engine; providing the search query to the search engine; and creating a transient IP from which results from the search engine are retrievable by the requestor.

The DNS resolver can be a DNS stub resolver or a DNS recursive name server.

The method can further comprise providing a result to the requestor, wherein the result comprises one or more DNS matching DNS records that are identified by the search engine based on a domain name of the requestor.

In some examples of the disclosure, a method for authenticating a data message from an Internet of Things ("IoT") services container embodied by a data structure stored in a memory of a computer is provided. The method can comprise obtaining the data message from the IoT services container, wherein the data message is digitally signed using a private key of an IoT device that created the data message, wherein the data message includes a data message identifier and a data payload, and wherein the container is operable to provide one or more services to the IoT device through one or more application programming interfaces ("APIs"); extracting the data message identifier from the data message, transforming the data message identifier into a device identifier; transforming the device identifier into a qualified name; obtaining, from a DNS record, a public key associated with the private key; and authenticating the data message using the public key.

In some examples, the one or more services can comprise a message bus service operable to receive and provide message to requestor or another requestor, a data service operable to process data received from the IoT device, a data transformer service operable to transform data from the IoT device from one state to another state, and an administrative service operable to maintain information on valid users of the data feed. The data message is obtained by the requestor on a predetermined schedule. The one or more services comprises one or more of: a registry server, a data service, a DNS server service, and a messaging service, a data transformer, a data aggregator, or a data average. The one or more APIs comprise an account API, a crawler API, a consume API, a publish API. The crawler API is operable to communicate with other containers.

In some examples of the present disclosure, a system, the system comprising: at least one hardware processor; a computer-readable medium operable to store instructions, that when executed by the at least one processor, performs a method for authenticating a data message from an Internet of Things ("IoT") services container embodied by a data structure stored in a memory of a computer, the method comprising; obtaining the data message from the IoT services container, wherein the data message is digitally signed using a private key of an IoT device that created the data message, wherein the data message includes a data message identifier and a data payload, and wherein the container is operable to provide one or more services to the IoT device through one or more application programming interfaces ("APIs"); extracting the data message identifier from the data message, transforming the data message identifier into a device identifier; transforming the device identifier into a qualified name; obtaining, from a DNS record, a public key associated with the private key; and authenticating the data message using the public key.

In some examples, a non-transitory computer readable medium comprising instructions, that when executed by a processor, perform a method for authenticating a data message from an Internet of Things ("IoT") services container embodied by a data structure stored in a memory of a computer is provided. The method comprising obtaining the data message from the IoT services container, wherein the data message is digitally signed using a private key of an IoT device that created the data message, wherein the data message includes a data message identifier and a data payload, and wherein the container is operable to provide one or more services to the IoT device through one or more application programming interfaces ("APIs"); extracting the data message identifier from the data message, transforming the data message identifier into a device identifier; transforming the device identifier into a qualified name; obtaining, from a DNS record, a public key associated with the private key; and authenticating the data message using the public key.

### BRIEF DESCRIPTION OF THE FIGURES

FIG. 1 illustrates an IOT environment 100 including an IOT service 115, according to various aspects of the present disclosure.
FIG. 2 shows an example internal organization environment (denoted by "Company A") having one or more IoT devices that can utilize an IOT service, according to various implementations.
FIG. 3 shows an example container, according to some aspects of the present teachings.
FIG. 4 shows an example of the container, according to some aspects of the present teachings.
FIG. 5 illustrates an entity relationship diagram that provides an example of a subset of the attributes of each entity managed by the registry services of containers shown in FIGS. 3 or FIG. 4, respectively, that can be operable to support container provided capabilities described here-in.
FIG. 6 shows an example of the datameeter service or data interface of containers shown in FIGS. 3 or FIG. 4, respectively, which can be operable to manage accounts and container processing services, according to aspects of the present teachings.
FIG. 7 illustrates another entity relationship diagram that provides an example of a subset of the attributes of each entity for the relationships between data elements managed by the entity service of containers shown in FIGS. 3 or FIG. 4, respectively.
FIG. 8 shows an example registration process for entities and containers, according to the present teachings.
FIG. 9 shows an example process for sending a message, according to aspects consistent with the present teachings.
FIG. 10 shows an example process for process entity event (datameeter), according to aspects consistent with the present teachings.
FIG. 11 illustrates an example of a hardware configuration for a computer device, that can be used to perform one or more of the processes of the IoT service,

### DETAILED DESCRIPTION

For simplicity and illustrative purposes, the principles of the present teachings are described by referring mainly to examples of various implementations thereof. However, one of ordinary skill in the art would readily recognize that the same principles are equally applicable to, and can be implemented in, all types of information and systems, and that any such variations do not depart from the true spirit and scope of the present teachings. Moreover, in the following detailed description, references are made to the accompanying figures, which illustrate specific examples of various implementations. Logical and structural changes can be made to the examples of the various implementations without departing from the spirit and scope of the present teachings. The following detailed description is, therefore, not to be taken in a limiting sense and the scope of the present teachings is defined by the appended claims and their equivalents.

Aspects of the present disclosure are related to an Internet of Things (IOT) service. According to aspects, the IOT service enables interactions between entities on the Internet and IOT capabilities, many of these incorporating new uses of DNS related standards. The IOT service includes a bundle of services that allow IOT devices to be registered, authenticated, and securely communicate with consuming entities and users. The IOT service utilizes DNS processes and services to register and authenticate the IOT devices.

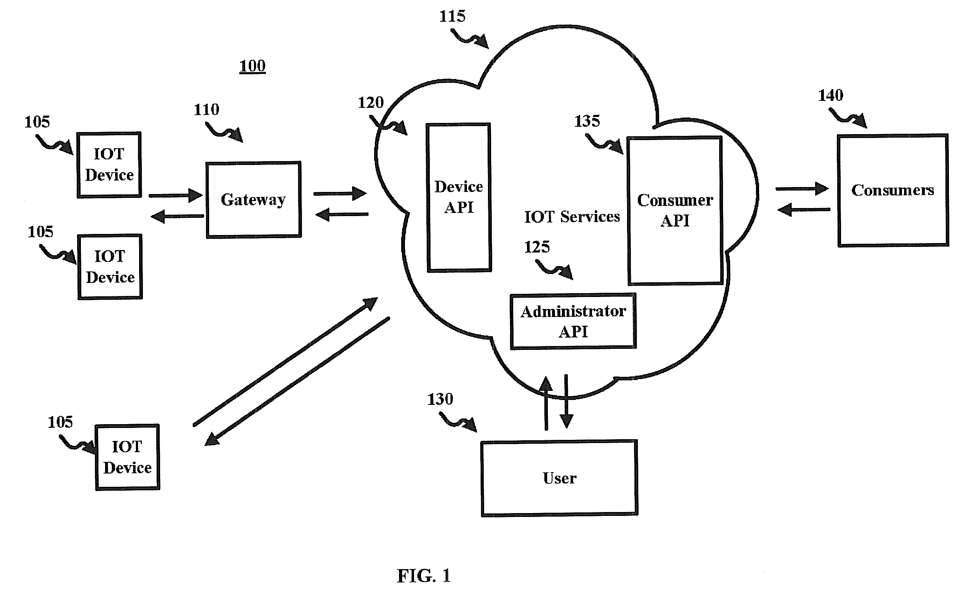

FIG. 1 illustrates an IOT environment 100 including an IOT service 115, according to various aspects of the present disclosure. While FIG. 1 illustrates various components contained in the IOT environment 100, FIG. 1 illustrates one example of an IOT environment and additional components can be added and existing components can be removed.

As illustrated, the IOT environment 100 can include a number of IOT devices 105. The IOT devices 105 can be any type of electronic device that is capable of communicating with other electronic devices. For example, the IOT devices 105 can include a wide variety of devices such as conventional computing devices, smart phones, appliances (e.g. washer/dryers that utilize network communications, smart thermostat systems, *etc.*), sensors (*e.g.* remote monitoring heart monitoring implants, biochip transponders, automobiles sensors, *etc.*), and the like.

In aspects, the IOT devices 105 can include the necessary hardware and software to directly communicate with an IOT service 115. In this example, the IOT devices can include the necessary hardware and software to communicate with the IOT service 115 using various protocols supported by the IOT service such as publish-subscribe messaging protocols, i.e., Message Queue Telemetry Transport ("MQTT"), and Domain Name System ("DNS") processes and services. Likewise, the IOT devices can be connected to an intermediary, such as a gateway 110. In this example, the gateway 110 can include the necessary hardware and software to communicate with the IOT devices 105 and the necessary hardware and software to communicate with the IOT service utilizing various protocols supported by the IOT service such as MQTT and DNS processes and services.

The Domain Name System ("DNS") is the part of the Internet infrastructure that translates human-readable domain names into the Internet Protocol ("IP") numbers needed to establish TCP/IP communication over the Internet. DNS allows users to refer to web sites, and other resources, using easier to remember domain names, such as "www.example.com", rather than the numeric IP addresses associated with a website, e.g., 192.0.2.78, and assigned to computers on the Internet. Each domain name can be made up of a series of character strings (e.g., labels) separated by dots. The order of the labels represents a relationship between domain names within the DNS hierarchy. The right-most label in a domain name is known as the top-level domain ("TLD"). Examples of well-known TLDs are "com"; "net"; "org"; and the like. Each TLD supports second-level domains, listed immediately to the left of the TLD, e.g., the "example" level in "www.example.com". Domains can nest within the hierarchy for many levels. For example, each second-level domain can include a number of third-level domains located immediately to the left of the second-level domain, e.g. the "www" level in www.example.com. The labels in a domain name include one or more characters, each of which may either be an ASCII character or a language-specific character (e.g., Arabic, Chinese, Hindi, and Latin letters with diacritics (e.g., é)). Domain names represented, in whole or in part, by language-specific characters are called Internationalized Domain Names (IDNs). While not yet available, potential IDN versions of well-known TLDs, such as ".com," ".net," and ".org." could also be created.

The responsibility for operating each TLD, including maintaining a registry of the second-level domains within the TLD, is delegated using a hierarchy of DNS services with different entities acting as the "registry" or "authoritative" registry for a portion of the hierarchy assigned to a particular organization, known as a domain name registry ("registry"). The registry is primarily responsible for answering queries for IP addresses associated with domains ("resolving"), typically through DNS servers that maintain such information in large databases, and for operating its top-level domain.

For most TLDs, in order for end-users to obtain a domain name, that domain name has to be registered with a registry through a domain name registrar, an entity authorized to register Internet domain names on behalf of end-users. Alternatively, an end-user can register a domain name indirectly through one or more layers of resellers. A registry may receive registrations from hundreds of registrars.

A zone file is a text file that describes a portion of the DNS called a DNS zone. A zone file is organized in the form of resource records (RR) and contains information that defines mappings between domain names and IP addresses and other resources. The format of zone files is defined by Internet Engineering Task Force (IETF) standards, with each line typically defining a single resource record. A line begins with a domain name, but if left blank, defaults to the previously defined domain name. Following the domain name is the time to live (TTL), the class (which is almost always "IN" for "internet" and rarely included), the type of resource record (A, MX, SOA, etc.), followed by type-specific data, such as the IPv4 address for A records. Comments can be included by using a semi-colon and lines can be continued by using parentheses. There are also file directives that are marked with a keyword starting with a dollar sign.

The DNS distributes the responsibility of assigning domain names and mapping those names to IP addresses by designating authoritative name servers for each domain. Authoritative name servers are assigned to be responsible for their particular domains, and in turn can assign other authoritative name servers for their sub-domains. This mechanism generally helps avoid the need for a single central registry to be continually consulted and updated. The DNS resolution process allows for users to be directed to a desired domain by a lookup process whereby the user enters the desired domain, and the DNS returns appropriate IP numbers. During the DNS resolution process, a request for a given domain name is routed from a resolver (e.g., a stub resolver) to an appropriate server (e.g., a recursive resolver) that then queries authoritative name servers to retrieve the IP address. To improve efficiency, reduce DNS traffic across the Internet, and increase performance in end-user applications, the DNS supports DNS cache servers that store DNS query results for a period of time determined by the time-to-live (TTL) of the domain name record in question. Typically, such caching DNS servers, also called DNS caches, also implement the recursive algorithm necessary to resolve a given name starting with the DNS root through to the authoritative name servers of the queried domain. Internet service providers (ISPs) typically provide recursive and caching DNS servers for their customers. In addition, home networking routers may implement DNS caches and proxies to improve efficiency in the local network.

According to aspects of the present disclosure, the IOT service 115 can assign a domain name to each of the IOT devices 105. The domain name can then be associated with the IP address of the IOT device 105. Domain names, *i.e.,* qnames, can also be assigned by an entity owner of the IoT device 105. To facilitate the registration of IOT devices, an IOT service can provide an application programming interface (API) that performs DNS registration of IOT devices on behalf of devices and gateways (DNS API not shown). The IOT service 115 can provide a domain name that uniquely identifies the devices as IOT devices and also shows the relationship of the devices. For example, the IOT service 115 can establish a domain for IOT devices such as ".iotservice.example.com." As the devices are registered with the IOT service 115, the IOT service assigns the domain name and creates the DNS records for the IOT devices. For example, if the IOT devices 105 are owned by "Company A," the IOT service can create a domain "companyA.iotservice.example.com." The IOT service 115 can assign a unique domain name to each of the IOT devices, for example, "iotdevicel.companyA.iotservice.example.com." The domain and the domain names for each of the IOT devices allow consumers 140 to locate and communicate with the IOT devices 105.

The IOT service 115 can also include an API 125 to allow a user 130 to communicate with the IOT service 115. The user 130 can communicate with the IOT service to establish the services of the IOT service 115, register devices 105, and the like. The IOT service 115 can also include an API 135 to allow the consumers 140 to locate and communicate with the IOT devices 105. In some aspects, one or more services provided by the IOT service 115 can reside on external servers accessed over the Internet (in the cloud).

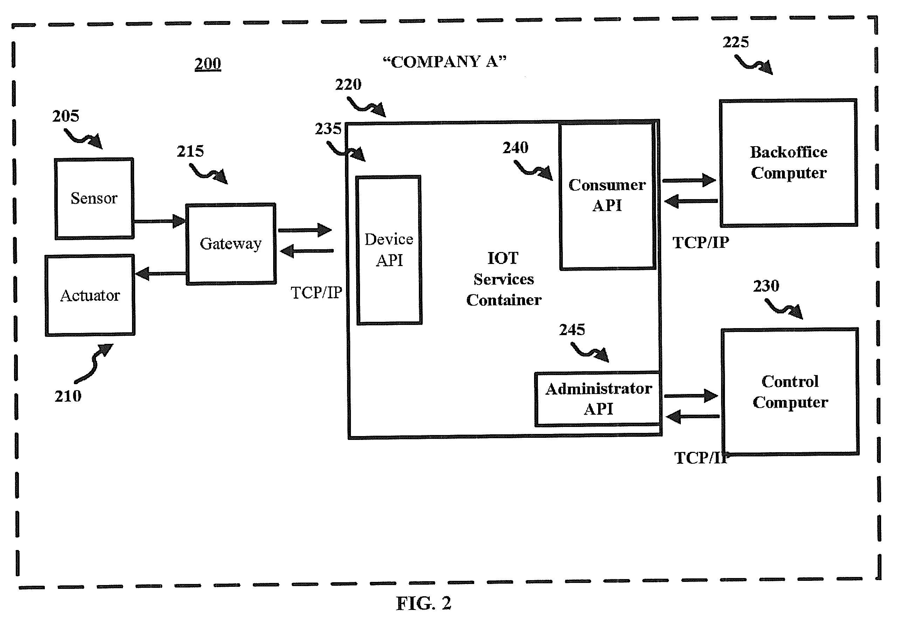

FIG. 2 shows an example internal organization environment 200 (denoted by "Company A") having one or more IoT devices that can utilize an IOT service, according to various implementations. As illustrated in FIG. 2, the internal organization environment can include a first IoT device, shown as sensor 205, and a second IoT device, shown as actuator 210, which are in communication with a gateway device 215. The IoT devices can be utilized by Company A in daily operations. For example, the sensor 205 can monitor the temperature of a piece of manufacturing equipment and the actuator 210 can be a component of the manufacturing equipment, e.g. cooling fan. Company A can desire to monitor and utilize the IoT devices using a IoT service.

In this example, the IoT service can be implemented as an IoT services container. For example, an IoT services container can be embodied as a data structure that can be stored in a computer memory. An IoT services container can produce and/or consume data that can be processed by another IoT services container, another IoT device, a computer, a software application, a processor, or a controller, etc. ,An IoT services container provides one or more services to an IoT device via one or more APIs. The one or more services can include, but are not limited to, an administrative service, a datameeter service (a data service that can take one or more data feeds and perform operations on the data including, but not limited to, modifying, averaging, aggregating, transforming, etc., as describe herein), a crawler service, a messaging service, a DNS service. The IoT services container 220 is arranged between the gateway device 215 and a back office computer 225 and a control computer 230. In some example, the IoT services container can be included in the gateway device 215. The IoT services container can be hosted by Company A or can be hosted by a separate entity or organization.

In this example, the sensor 205, such as a temperature sensor, can detect the temperature of a particular area of Company A and send temperature readings, either continuously or periodically, to the to the gateway device 215 through a data feed. The gateway device 215 can communicate with the IoT services container 220, through a device API 235 over a communications protocol, i.e., TCP/IP, to provide the data feed to subscribers/consumers thereof. The back office computer 225, through a consume API 240 of the IoT services container 220 over a communications protocol, i.e., TCP/IP, may be operable to perform various functions, including, but are not limited, administrative, record keeping, etc. The control computer 230, through an administrator API 245 of the Iot services container 220 over a communication protocol, i..e., TCP/IP, may be operable to monitor the temperature from the sensor 205 and determine that a particular action is warranted based on readings from the sensor. In this example, if the control computer 230 determines that the temperature monitored by the sensor 205 is too high, the control computer 230 can send a signal through the IoT services container 220 to the actuator 210 to lower the temperature by turning on a fan for a given time period.

According to aspects of the present disclosure, the IOT service 115 can utilize DNS process and services, such as DNS-based Authentication of Named Entities (DANE) and DNSSEC to register and authenticate IOT devices, this enabling authentication of data received from IOT devices and also supporting encryption of data sent by IOT devices. DANE provides a mechanism for associating the public key or a certificate containing a public key with an IOT device that can be identified by means of a unique domain name associated with a device. This association of a device with its public key or certificate containing a public key is stored in DNS registry records, either TLSA or SMIMEA, that are identified by the unique domain name associated with a device.

The need for IoT device authentication becomes more apparent as more and more IoT devices are attached to the Internet. As a result, it becomes less and less likely that there will be direct communication between the IoT devices and the applications that will be used to monitor and control them. The current model for authentication is based on verifying the endpoints of the communication where typically the client verifies the X.509 certificate provided by the server against the local trust store, and the server verifies the client based on a credential. The credential provided by the client is typically a username/password combination, an API key, or an X.509 client certificate. When interaction between the IoT device and the application is separated by messaging middleware, such as a message bus of a middleware container, the current model requires placing trust in the message bus. The IoT device authenticates with the message bus and the application authenticates with the message bus. However, since there is no direct communication between the IoT device and the application, the IoT device never authenticates with the application and the application never authenticates with the IoT device. It is also possible that many, untrusted entities may exist in the interaction path between the IoT device and the application. For instance, due to unreliable or intermittent communication, it may be desirable to introduce multiple gateways and/or multiple containers, each of which are capable of storing a message until network conditions are such that the message can be forwarded along the path towards the destination.

As a consequence, two entities, *i.e*, the IoT device and the application (or another IoT device or a container), would benefit by a mechanism of validating that the information they receive came from the expected source and was not modified in transit, even when the information passed through one or more untrusted intermediaries. The approach to validating the information sources in these scenarios taught in the invention described here-in is based on creating a binding between a name and a public key in a globally accessible registry. This validation mechanism can be arranged such that one entity, *i.e.,* the IoT device, first generates a private and public key pair. The private key is stored locally within an electronic memory of the IoT device. The name of the IoT device and the public key is sent to a globally accessible registry, *i.e.,* a DNS registry, where it is stored. When the IoT device has information to send, the IoT device generates a payload in an application specific way. A cryptographic signature is computed over the name of the IoT device and the payload. The resulting message is the combination of the name of the IoT device, the payload, and the cryptographic signature.

The message is then forwarded towards the recipient, *i.e.,* an application, another IoT device, or a container. When received by the recipient, the name of the IoT device, the payload, and the signature are extracted from the message. The public key of the IoT device is retrieved from the globally accessible registry using the name of the IoT device as the lookup key (either directly or indirectly). The public key is used by the recipient to verify the source of the message and that the message has not been modified in transit. Every entity has a private/public key pair. The private key is used by the entity for signing data to be sent and decrypting data that is received, and the public key is used by entities wishing to verify the authenticity of signed data received from a entity and/or to encrypt data to be sent to an entity.

DANE can be used for authentication and privacy for entities registered into the DNS as described above, *i.e.,* IoT devices, containers, and applications. DANE provides a standards-based mechanism for storing and retrieving the public keys used in authentication and encryption mechanisms. The public key for registered entities is available from DNS by querying the DNS for the DANE defined record corresponding to the entity. The record to be retrieved is identified in the query using a derivation of the domain name (qname) as the search value. A retrieved record containing the public key for an entity is the one created by the IOT registration process. These records will be of a type defined by the DANE protocol, either TLSA or SMIMEA. Messages (data) that are digitally signed with the corresponding private key of the IoT device can be authenticated using the public key that is registered in DNS.

The integrity of the authentication and encryption processes described herein relies on trusting that only the entity to which a private key applies will use that private key to sign messages or for decrypting communications (messages) received by the entity. Entities are expected to keep the private key in secure storage in which only the entity has access. An entity can use the private and public keys as part of a communication using a secure transport, TLS/DTLS. This present disclosure also applies to messages originated from an entity and which have been signed by the entity as a means of assuring the authenticity of such messages. Additionally, a device (A) could encrypt messages using the public key of another device (B) so as to protect the privacy of the data contained in the messages. Since only device B has the private key, only device B is able to decrypt the message.

Entities communicate with each other via IOT message services. One example of such a service is a publish/subscribe messaging infrastructure on which a feed-based messaging protocol is based. In this example, an entity can publish messages to a specific feed based on a feed identifier (feed ID) that is unique within the messaging service. Entities subscribed to a feed identified by that feed identifier will receive messages published to the feed. The message data published to feeds can be described with a shared ontology that standardizes the terms used for the data elements contained in messages, *i.e*., temperature, speed, etc. Message flows are typically one-way. Two-way messaging uses two one-way flows i.e. for two entities to communicate, each would subscribe to a feed to which the other publishes messages. Entities can be broadly characterized as IoT devices, applications, services, and containers (IoT service containers), and can be grouped into a variety of arrangements including, but not limited to the following: a device (such as a thermometer) that publishes data (such as temperature) to a feed, which then provides that data to an entity interested in using that data (a web app that displays current temperature); an entity (a light bulb) that can be controlled via messages it receives from a feed it subscribes to which a controlling entity (Web app) publishes control messages (toggle light bulb on and off).

In general, containers, as used herein, allow entities, *i.e.,* IoT devices, to be registered, allow searches to find entity data feeds based on metadata, may use a crawler to import metadata from other configured containers. A data feed (or also referred to as a data stream or data message or data) can be data produced by and/or consumed by a IoT device, IoT services container, or other computer device. The data feed can be transmitted and/or received by a publish/subscribe architecture, as discussed further herein. For example, the data feed can include parameters measured, transformed, modified, etc.by an IoT device. The data feed can be organized into one or more data packets that can be processed by, for example, a hardware processor, software, firmware. The data feed (aka, data stream, data message, data) can be associated with an identifier (aka, data stream identifier, data message identifier, data stream identifier) that can be used to identify one or more properties of the data (i.e., source of data, type of data). A crawler can poll configured containers for changes based on a schedule and/or based on receipt of a notification of a change. A container may be configured to only expose a limited subset of metadata to crawlers. A crawler can perform one or more the following functions: uses a schedule to poll other containers for metadata; imports changes from those containers (newly created entities, updated entities, deleted entities); can be notified by other containers that changes have occurred; can support processing both full registry dumps and incremental logs from other containers.

An entity also can describe a protocol for interacting with it. Entities can produce or augment data and produce data feeds or feeds formatted into messages (entity feed) based on the data. A feed can describe the content of produced messages, such as a temperature, speed, or location, based on the shared ontology. A feed can produce messages based on several mechanisms, including at least: a schedule, e.g., average temperature reading for the last minute; the arrival of another message. A transformer, as discussed further below, is an optional script that executes in the context of the feed and which operates on the messages and data being transmitted through the feed.

Messages from an entity feed will traverse at least one container, which is the container in which the entity is registered. For direct communication, the entity feeds (outside the container) can maintain one or more of the following: a list of subscribers (feeds that wish to receive messages) and a list of subscriptions (feeds that are allowed to send). Additional DNS records can be added indicating how to connect to the entity: thermo1.cust1.iot.com IN A 10.0.1.253_coap._udp.thermol.custl.iot.com IN SRV 0 0 42 42 thermo1.cust1.iot.com.

The entity could use DNSSEC queries for TLSA/SMIMEA records for entities, just as the container does, to validate incoming messages. Subscription requests are processed by the container in which the entity is registered.

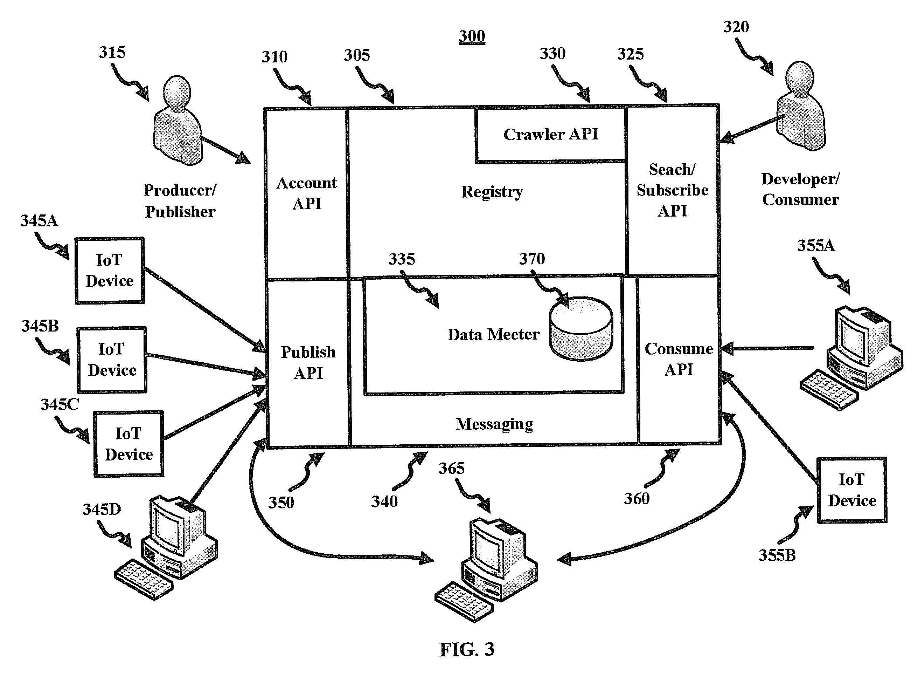

FIG. 3 shows an example container 300, according to some aspects of the present teachings. The container 300 can be configurable to provide one or more services to one or more IoT devices or entities. In the example shown in FIG. 3, the container 300 includes a registry component 305 that can be operable to provide various administration-related services, such as, management of account(s), users, entities, feeds, permissions, and other related services. The registry component 305 can be accessed by a producer/publisher 315 through an account API 310, accessed by a developer/consumer 320 through a search/subscribe API 325, and accessed by a crawler 330 through a crawler API 330.

Container 300 can also include a datameeter 335 that is operable to manage data-related services. The datameeter 335 can implement message processing for the container 300 by providing messages in a queue. Messages can be read from the queue and processed by a container feed management process. The process can execute one or more transformer services associated with the data feed. The task can have access to the incoming message (if any) and the time-series database 370. A transformer invoked by a feed management process may create new messages that are then queued to feeds and relayed through the feeds to feed subscribers. Incoming messages that are not processed by a transformer may be directly queued to subscribers.

Container 300 can also include a messaging bus 340 that is operable to obtain data feeds from a variety of publishers 345A, 345B, 345C, 345D through a publish API 350 and provide data feeds to a variety of subscribers 355A, 355B through a consume API 360. Entity 365 is shown as both consuming/subscribing to a data feed through consume API 360 and producing/publishing a data feed to the obtained by container 300 through publish API 350. The messaging bus 340 provides for the transport of messages into and out of the container 300. It includes APIs for both push and pull modes to meet requirements of specific entities. The messaging bus 340 can support a variety of protocols including, but not limited to, REST/MQTT over HTTPS.

Although not shown in FIG. 3, container 300 can be operable to provide services other than the one described above. For example, container 300 can include a DNS server service that can be accessible through a DNS server API. Also, container 300 can include a transformer service that can transform, *i.e.,* perform functions on the data such as aggregation, averaging,... on data that is made available through publish API 350 and/or consume API 360.

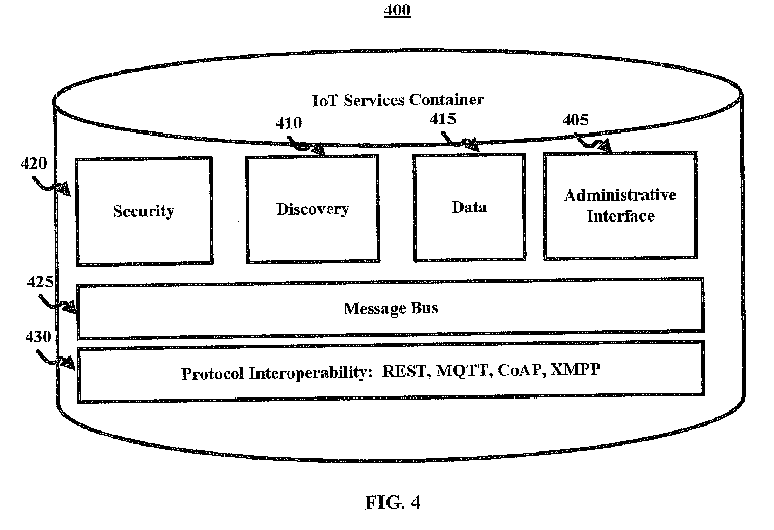

FIG. 4 shows an example of the container 400. As shown, container 400 can also include an administration interface 405 that allows for management of accounts, users, entities, and feeds. The container 400 can also include a discovery interface 410 can that be operable to allow searching for entity feeds by querying by feed description linked to a shared ontology. The search results can be ranked by a variety of factors, such as, by reputation of the entity producing the feed. The discovery interface 410 can also allow entities to subscribe to an entity feed. The container 400 can also include a data interface 415 that can be operable to allow time series functions to be performed, such as data aggregation for a specified period of time, and can be available to message transformers. The container 400 can also include a security interface 420 that can be operable to provide security functionality to the container 400 or other entities. The container 400 can also include a message bus 425 that functions as a messaging interface to publish data for an entity feed and transform and deliver messages. The container 400 can allow for protocol interoperability 430 using, protocols for example, REpresentational State Transfer ("REST"), message queue telemetry transport ("MQTT"), constrained application protocol ("CoAP"), and/or extensible messaging and presence protocol ("XMPP").

Containers, such as the container 300 and/or 400, can be deployed anywhere including, but are not limited to, DNS registry data centers and DNS registry edge sites, such as those operated by Verisign, public cloud infrastructure, network and IOT gateways, and customer private sites. Containers 300 and 400 can also be arranged in a hierarchical arrangement, as discussed further below.

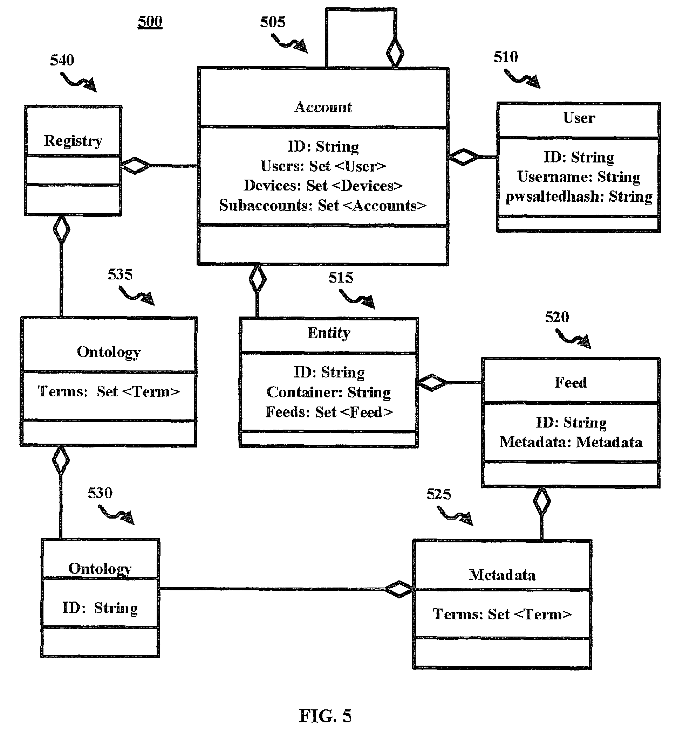

FIG. 5 illustrates an entity relationship diagram that provides an example of a subset of the attributes of each entity managed by the registry services 500 of containers 300 and 400, respectively, that can be operable to support container provided capabilities described here-in. This managed data supported the service offering a protocol for interacting with it and the feeds defined within it. Each account can have users and entities. Also, each account can have subaccounts. A user can manage entities in a subaccount. The account provides the base domain name for entities registered in the account. The registry provides the shared ontology used by feeds. The registry provides the search API for discovering entities. The registry provides the subscription API for connecting feeds between entities.

As shown in FIG. 5, an account entry 505 includes the following fields: ID field that is characterized by a string; users field that lists users that are registered with the container to publish and/or subscribe to data feeds of the container; device field that devices that are registered with the container to publish and/or subscribe to data feeds of the container; and a subaccounts field that lists the subaccount for a particular account. A user entry 510 of the account entry 505 includes the following fields: ID field; username; and password (or hash or salted hash of the password) that are all characterized by strings, respectively. An entity entry 515 includes the following fields: ID field, container, and feeds. A feed entry 520 of the entity entry 515 includes the following fields: ID and metadata. A metadata entry 525 of the feed entry 520 includes the following fields: terms. A term entry 530 of the metadata entry 525 includes and ID string. An ontology entry 535 defines the term from the term entry 530 in an ontology that is provided to the registry 540.

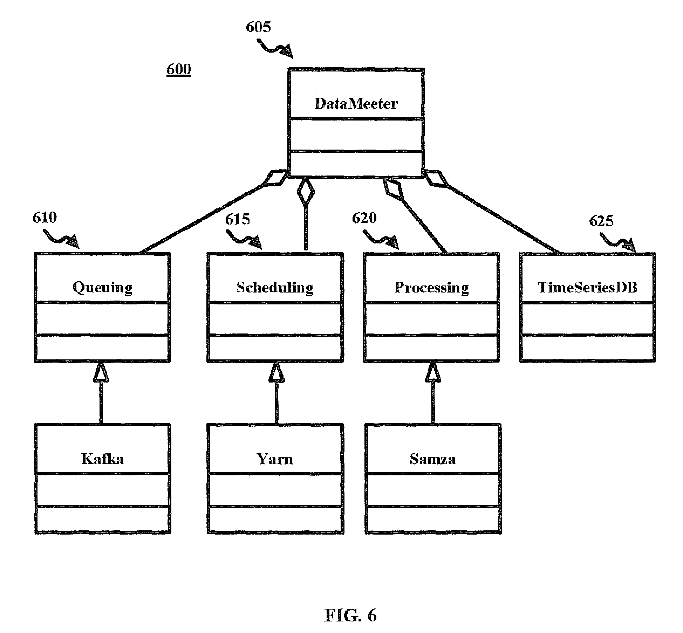

FIG. 6 shows an example of the datameeter service 335 or data interface 415 of containers 300 and 400, respectively, which can be operable to manage accounts and container processing services, according to aspects of the present teachings. The data services 605 provided by datameeter service 335 or data interface 415 can include, but are not limited to, queuing services 610 (through, *i.e*., the open source Kafka message broker), scheduling services 615 (through, *i.*e., the open source Yarn cluster management service), processing services 620 (through, *i.e.,* the open source Samza distributed stream processing framework), and time series processing services 625.

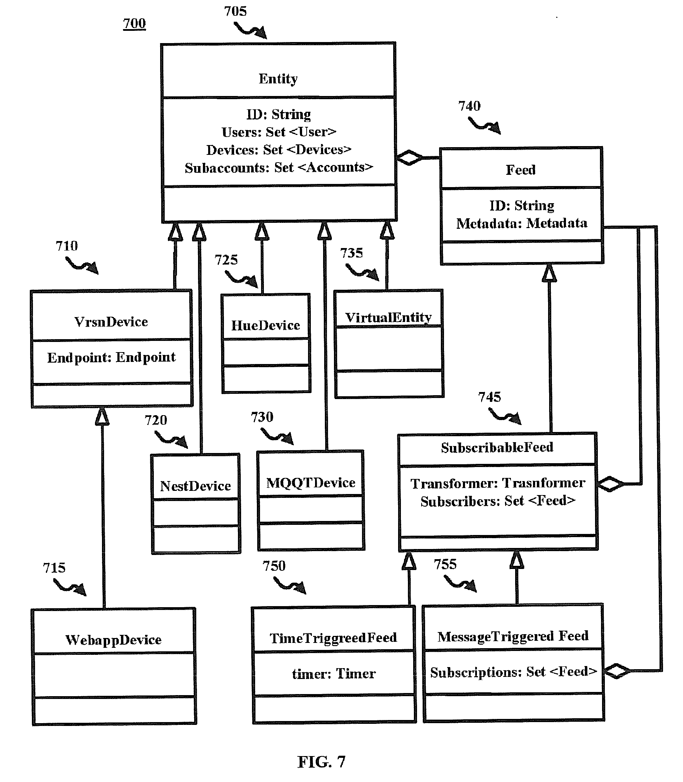

FIG. 7 illustrates another entity relationship diagram that provides an example of a subset of the attributes of each entity for the relationships between data elements managed by the entity service of containers 300 and 400, respectively. This managed data supports the service offering a protocol for interacting with it and the feeds defined within it. The entity describes a protocol for interacting with it and a collection of feeds. A feed describes the content provided in produced messages, such as a temperature, speed, or location based on the shared ontology. A feed may produce messages based on a number of mechanisms, including based on a schedule, e.g., average temperature reading for the last minute and/or the arrival of another message. A transformer is an optional script that executes in the context of the feed to perform some operation on message data passing through the feed, for example, computing an average temperature for some unit of time.

As shown in FIG. 7, entity record 705 can include the following fields: ID, container, and feeds. Entity record 705 can include the following records: VrsnDevice record 710 with an endpoint field that can include webappdevice record 715; nestdevice record 720; huedevice record 725; MQTT device record 730; virtual entity record 735. A feed record 740, for the entity record 702; can include the following fields: ID and metadata. Feed record 740 can include the following records: subscribablefeed record 745 with a transformer field and a subscribers field; timetriggeredfeed record 750 with a timer field; and a messagetriggeredfeed record 755 with a subscriptions field.

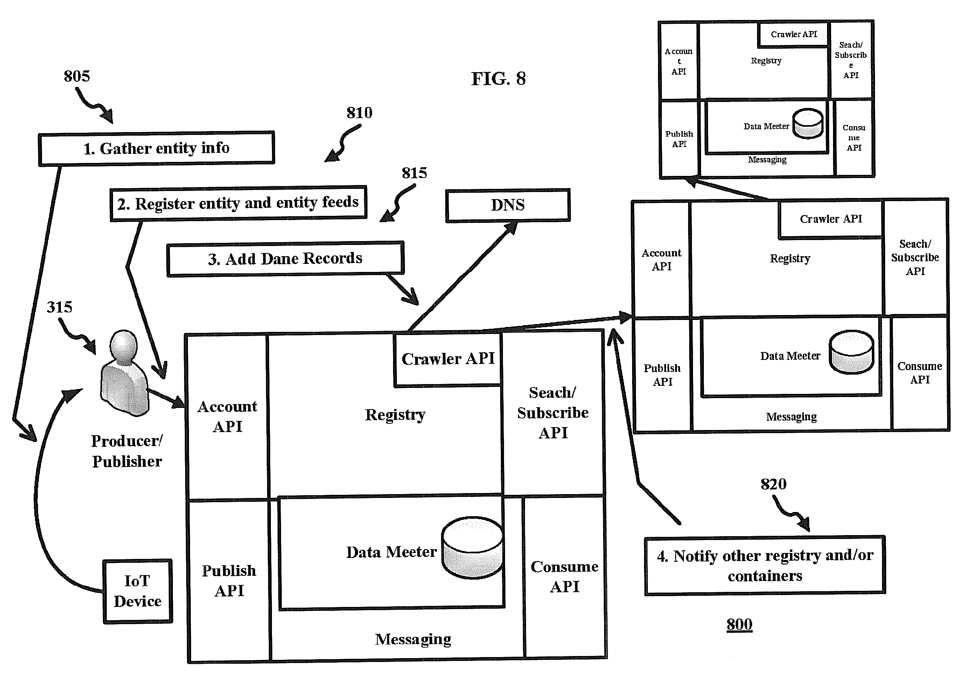

FIG. 8 shows an example registration process 800 for entities and containers, according to the present teachings. At 805, information characterizing entity, *i*.*e*., IoT device, is gathered. At 810, the entity and any data feeds produced by the entity are registered with the container through an account API of the container. At 815, one or more DNS records, *i.e.,* DANE record (TLSA record) is created for the entity and added to a zone file of the DNS registry. At 820, other containers are notified of the entity and/or data feed produced by the entity through a crawler API of the container.

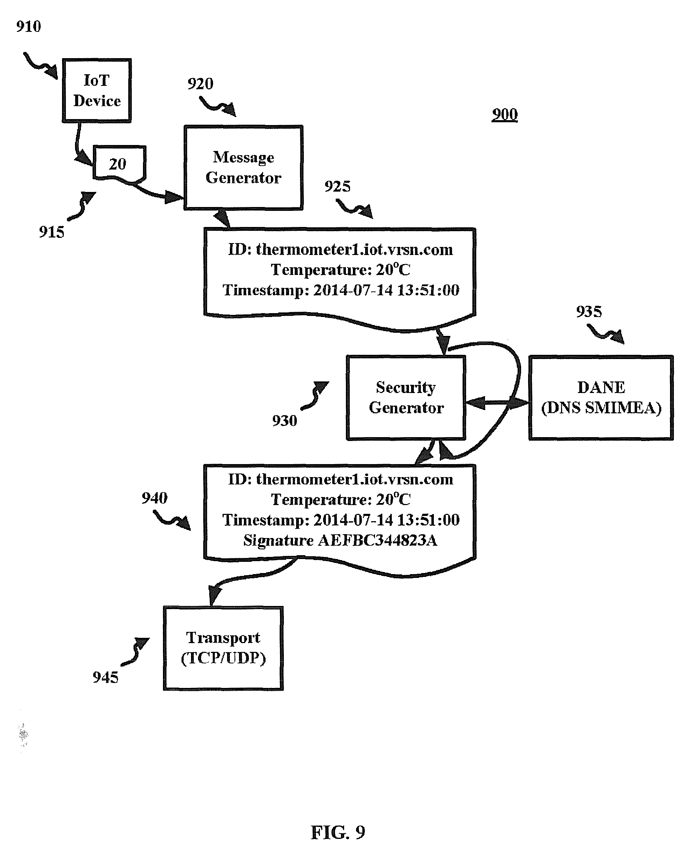

FIG. 9 shows an example process 900 for sending a message, according to aspects consistent with the present teachings. At 910, IoT device, shown as a temperature sensor, measure temperature data 915, show as 20 degrees. At 920, a message generator uses metadata for the sensor to determine its registered id and units of measure. The message generator and formats a message with the id, temperature, and a timestamp. At 925, a message is shown that includes: id: thermometer1.exapmple.iot.vrns.com; temperature: 20°C; timestamp:2014-07-14 13:51:00. At 930, security generator, using DANE 935 (DNS SMIMEA), for non-secure transport, the security generator may encrypt the message using the public key of one or more containers or subscribing entity feeds. The security generator uses the entity's ID to lookup a private key from secure storage. The private key is used to generate a signature of the data, which is added to the message. The security generator produces a message 940 containing: id: thermometer1.exapmple.iot.vrns.com; temperature: 20°C; timestamp:2014-07-14 13:51:00; signature: AEFBC344823A. At 945, the message is transmitted using a transport protocol (TCP/UDP) that uses configuration data to send the signed message to the cloud for processing.

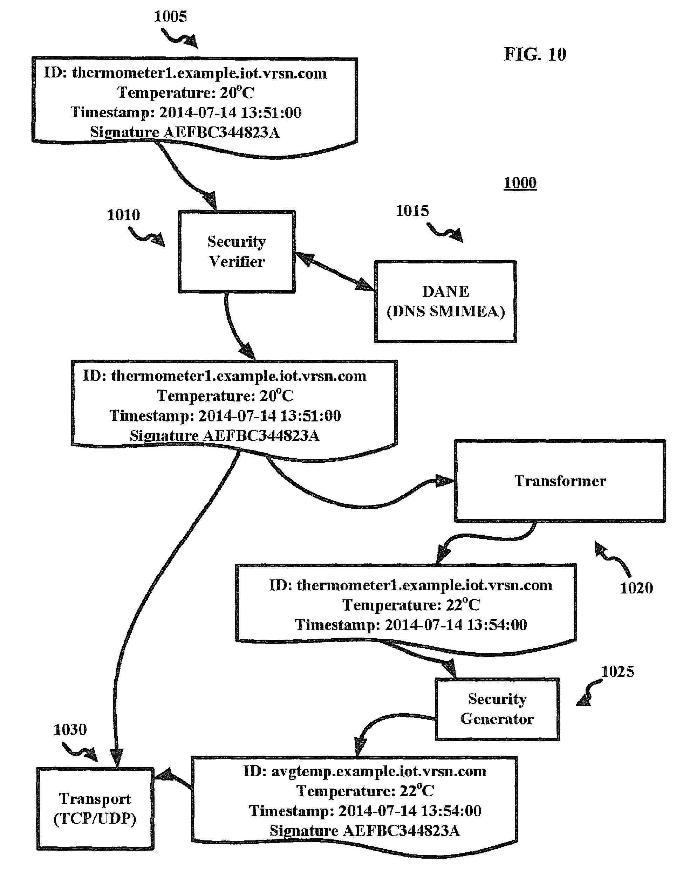

FIG. 10 shows an example process 1000 for process entity event (datameeter), according to aspects consistent with the present teachings. At 1005, message includes: id: thermometer1.exapmple.iot.vrns.com; temperature: 20°C; timestamp:2014-07-14 13:51:00; signature: AEFBC344823A. The message is sent to security verifier 1010 using DANE (DNS TLSA) 1015. Security verifier checks the identity of the sensor verify the signature on the message using the public key associated with the sensor as retrieved from the DNSSEC secured DANE record (TLSA or SMIMEA) for thermometer1.example.iot.vrsn.com. The message is passed to the transformer code configured for the entity feed. The transformer generates zero or more messages that are formatted, signed, ad published. The messages from the transformer may have elements such as: id: avgtemp.example.iot.vrsn.com; temperature 22°C; timestamp:2014-07-14 13:51:00. Security generator generates a message including: id: avgtemp.example.iot.vrsn.com; temperature 22°C; timestamp:2014-07-14 13:51:00; signature (based on private key assigned to security generator and used in calculating a signature based on the other content of the message): AEFBC344823A. The message from security generator and/or from security verifier is then sent using a communication protocol, such as TCP/UDP/MQ.

In some aspects, IoT devices can be defined in terms of the service interface they present and the domain name from which this service interface can be accessed. The service interfaces can be defined within an ontology. Keywords can also be associated with a IoT device and its interfaces. This information can be placed in a "web schema" registry that provides for IoT device and service discovery based on traversing ontologies, searching an ontology, or doing a keyword search. The web schema approach also addresses problems associated with identifying common services that are needed when performing IoT interactions with the IoT devices and applications to which those common services apply.

Common services include categories, such as, user authentication, payment processing, copyright notification, privacy policy enforcement, data provenance, ontology association. Common services registry functions can include the following: a global registry that provides for the registration of common services; a mechanism for programmatically performing the following registration-related functions including, but not limited to: authenticating with the registry, creating registry entries, modifying registry entries, deleting registry entries. A registry entry for a service can include a number of data elements including, but not limited to, a category of service, a provider of the services, interface mechanism(s) for interacting with the service, authentication service provider(s), authentication method(s), payment mechanism(s), payment provider(s). The registry can provide the ability to programmatically look up or discover registered common services based on various metadata used to classify common services, including, but not limited to, category of service, provider of the service, interface mechanism for interacting with the service.

The registry can be used to provide for a common services registry where entries are associated with IoT devices and IoT applications by means of association data records. Data records can be associated that contain a reference to one or more entries in the common services registry. The data records that are associated can be stored in a location where an application wishing to interact with an IoT device or an IoT service can look them up based on an identifier that either uniquely identifies the IoT device or IoT service, or by an identifier that identifies the IoT device or IoT service as being one of a grouping of IoT devices or IoT services for which association(s) is/are applicable. The association of data records can be stored in one or more of the following: configuration files, databases, DNS registries, and the common services registry. An alternative to the use of association data records is to have associations inferred based on characteristics of the IoT device or IoT services. For example, at the time an IoT device or IoT service is interacted with, and where the IoT device or IoT service has been associated with entries in the common services registry, the application interacting wishing to interact with the IoT device or IoT service can retrieve the association data and then uses this data to retrieve the registry entries defined in the associations from the common services registry. Once an application has retrieved registry entries from the common services registry, the information in those entries can be used by the application to control what common services it interacts with and how those interactions are performed.

In some aspects, containers can be arranged in a hierarchy, which can allow for increased scalability in IoTs. As the number of IoT devices and data feeds from IoT devices increases, support for these IoT devices and services will become increasingly more difficult using an architecture where all messages pass through a centralized component. To address these issues, a hierarchy of multiple registries and message buses is provided to enable further interconnectivity. In this hierarchical framework, each device and its associated feeds can be registered in a single container that comprising a device registry and associated message bus. Multiple containers can exist, each with its own registry and message bus. In addition to IoT devices which are registered locally, the container can import registration information from one or more other containers. The associations of containers can take many forms including, but are not limited, to a tree structure with a root registry containing the registration information of all descendants. Registration information can be exchange between containers, where the registration information allows IoT device feed subscriptions to be setup between IoT devices registered in different containers. Once a IoT device feed subscription is created, the message flow need only traverse a minimal set of containers. The IoT device can send a message to its message bus, which forwards the message to the message bus of the recipient, which then forwards the message to the recipient.

In some aspects, data feeds from IoT devices can be ranked based on network popularity in an IoT system, where the IoT system, as discussed above, can include IoT devices, gateways, an IoT platform collecting data from IoT devices, gateways or provided, generated by the user through a 3^{rd} party source. Any of a variety of mechanisms can be chosen for ranking network popularity of a data feed, including for example: number of subscribers; volume of data being subscribe to; user-submitted ratings, and other rating mechanisms described here-in. Data feeds or data streams are data generated by IoT devices, *i.e.,* sensors, and transmitted to the IoT platform. The data feeds can have metadata, attributes and features associated to them. Users, *i.e.,* end-users, other IoT devices, containers, may subscribe to one or data feeds and generate new data feeds by combining them or transforming them so that other users can subscribe to them. The system allows the import of 3^{rd} party data or external data feeds to be used on the IoT platform.

The number of subscribers to each data feed can be tracked to define a popularity measure. Since new data feeds can combine and transform existing data feeds, this information can be tracked by creating a virtual link between the originating feed and the destination feed. With the increasing number of feeds, a network of virtually interconnected data feeds can be created, where some of the data feeds can play a nodal role in the network by becoming a hub. This can be used to reflect the importance of that node in terms of source of information for the rest of the network. A standard graph algorithm can be computed with a centrality measure is associated with each node. The higher the centrality measure indicates that the node is more popular. When performing a search on a feed based on metadata, ontologies, and/or attributes, the centrality measure can be included as a way to rate and rank the results of the search.

In some aspects, data feed recommendation can be based on user/IoT device profiles in an IoT system. Different IoT devices can generate data feeds with certain attributes, *i.e.,* location, sensor type, ownership, etc, and certain features, *i.e.,* minimum, maximum value, average value, frequency, last value etc. The users of the IoT system, *i.e.,* end-users, other IoT devices, containers, can have a profile describing them and their interest. Users can subscribe to a data feed, *i.e.,* weather information, temperature sensor in a room, and also create new feeds by combining existing data feeds. As the user subscribes to more and more data feeds, the IoT system can profile the user describing the spectrum of interest based on the attributes of the subscribed data feeds.

The IoT system can segment the users based on their data feed subscription interest. A feature vector reflecting the characteristics/attributes of subscribed feeds can be used to represent the interest of users. Users of the IoT system can then be clustered based on that feature vector. A benefit of this approach is that users exhibiting similar interest can be part of the same cluster or group. Any new user to the IoT system can be part of one of these clusters. The IoT system can then provide recommendations of data feeds to the new user so that the new user may subscribe to those data feeds that were proven to be interesting/relevant for other members of that same cluster. The new user can then discover new data feeds based on the history and behavior of similar users.

In some aspects, a feature based discovery mechansim for IoT devices and data feeds can be provided. The IoT platform may be connected to another IoT system. Multiple users and IoT devices can connect to the IoT platform to search, find, browse and use data streams (or data feeds). The data feeds can be defined by a set of features, *i.e*., minimum value, maximum value, frequency, Fourier descriptors, etc. The user can search for data feeds based on the set of features. The user may provide a data feed as input and query the IoT system for data feeds that exhibit a correlation, similar pattern, or an opposite pattern. The user may query the IoT system to find IoT devices that generate this type of data feed characteristics based on the description of attributes or features associated to the data feeds. This may apply to data feeds that are generated by a user through a transformation or combination process of more than one data feeds. The data feeds can then be compared to check for causality. For example, the user may provide two or more data feeds as an input and query the IoT system for a causality check. The IoT system can then statistically analyze the inputs by using specific algorithms. The output can be a degree of causality between the data feeds. The above-described analysis can be performed on different time scale, *i.e.,* seconds, minutes, days, weeks, months, years, etc.

In some aspects, data from the data feeds can be transformed into one or more different data types. In such case, it is often useful to be able to track back through the transformations that have been applied to produce data to identify each transformation that occurred and the original source(s) of the data. This capability is supported by having the data encapsulated in a "envelope" or "wrapper" that is applied at each transformation and which contains the identify of the transformer and which is signed by the private key of the transformer. The envelope may contain additional data, such as the date and time at which the transformation occurred, the version number of the transformer, and other data. This provides the capability to trace back every step from origin to destination through each transformation. This transparency provides the user with a clearer picture of what the actual data feed is and helps the user make more informed subscriptions. Also, this process may also help evaluate feed quality and elaborate feed ratings.

In one or more exemplary embodiments, the functions described can be implemented in hardware, software, firmware, or any combination thereof. For a software implementation, the techniques described herein can be implemented with modules (e.g., procedures, functions, subprograms, programs, routines, subroutines, modules, software packages, classes, and so on) that perform the functions described herein. A module can be coupled to another module or a hardware circuit by passing and/or receiving information, data, arguments, parameters, or memory contents. Information, arguments, parameters, data, or the like can be passed, forwarded, or transmitted using any suitable means including memory sharing, message passing, token passing, network transmission, and the like. The software codes can be stored in memory units and executed by processors. The memory unit can be implemented within the processor or external to the processor, in which case it can be communicatively coupled to the processor via various means as is known in the art.

If implemented in software, the functions can be stored on or transmitted over a computer-readable medium as one or more instructions or code. Computer-readable media includes both tangible, non-transitory computer storage media and communication media including any medium that facilitates transfer of a computer program from one place to another. A storage media can be any available tangible, non-transitory media that can be accessed by a computer. By way of example, and not limitation, such tangible, non-transitory computer-readable media can comprise RAM, ROM, flash memory, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes CD, laser disc, optical disc, DVD, floppy disk and Blu-ray disc where disks usually reproduce data magnetically, while discs reproduce data optically with lasers. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Combinations of the above should also be included within the scope of computer-readable media.

In accordance with the present disclosure, the ability to manage multiple (two or more) provisioned DNS registry objects in a single transaction using the multiple domain EPP command structure, as described above, can allow for greater efficiencies of communication with the registry over low-bandwidth networks. Instead of requiring a registrar to issues multiple EPP commands for single registry objects, the ability to manage multiple provisioned DNS registry objects together as presently described can have cost savings to both the registrar that issues the commands and the registry that processes the commands.

Resources described as singular or integrated can in one embodiment be plural or distributed, and resources described as multiple or distributed can in embodiments be combined.

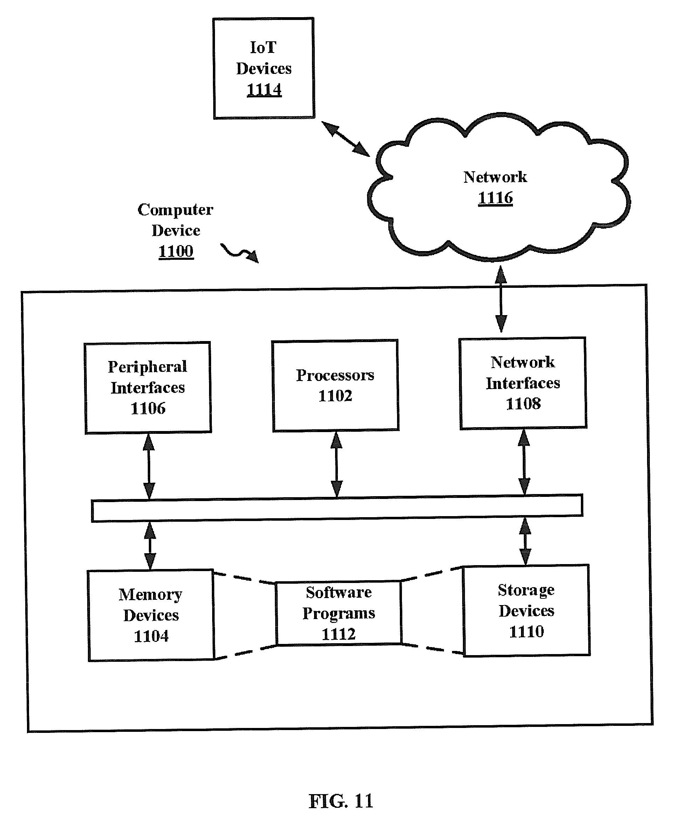

For example, FIG. 11 illustrates an example of a hardware configuration for a computer device 1100, that can be used to perform one or more of the processes of the IoT service described above. While FIG. 11 illustrates various components contained in the computer device 1100, FIG. 11 illustrates one example of a computer device and additional components can be added and existing components can be removed.

The computer device 1100 can be any type of computer devices, such as desktops, laptops, servers, *etc*., or mobile devices, such as smart telephones, tablet computers, cellular telephones, personal digital assistants, *etc.* As illustrated in FIG. 11, the computer device 1100 can include one or more processors 1102 of varying core configurations and clock frequencies. The computer device 1100 can also include one or more memory devices 1104 that serve as a main memory during the operation of the computer device 1100. For example, during operation, a copy of the software that supports the IoT service can be stored in the one or more memory devices 1104. The computer device 1100 can also include one or more peripheral interfaces 1106, such as keyboards, mice, touchpads, computer screens, touchscreens, etc., for enabling human interaction with and manipulation of the computer device 1100.

The computer device 1100 can also include one or more network interfaces 1108 for communicating via one or more networks, such as Ethernet adapters, wireless transceivers, or serial network components, for communicating over wired or wireless media using protocols. The computer device 1100 can also include one or more storage device 1110 of varying physical dimensions and storage capacities, such as flash drives, hard drives, random access memory, etc., for storing data, such as images, files, and program instructions for execution by the one or more processors 1102.

Additionally, the computer device 1100 can include one or more software programs 1112 that enable the functionality of the IoT service described above. The one or more software programs 1112 can include instructions that cause the one or more processors 1102 to perform the processes described herein. Copies of the one or more software programs 1112 can be stored in the one or more memory devices 1104 and/or on in the one or more storage devices 1110. Likewise, the data, for example, DNS records, utilized by one or more software programs 1112 can be stored in the one or more memory devices 1104 and/or on in the one or more storage devices 1110.

In implementations, the computer device 1100 can communicate with one or more IoT devices 1114 via a network 1116. The one or more IoT devices 1114 can be any types of devices as described above. The network 1116 can be any type of network, such as a local area network, a wide-area network, a virtual private network, the Internet, an intranet, an extranet, a public switched telephone network, an infrared network, a wireless network, and any combination thereof. The network 1116 can support communications using any of a variety of commercially-available protocols, such as TCP/IP, UDP, OSI, FTP, UPnP, NFS, CIFS, AppleTalk, and the like. The network 516 can be, for example, a local area network, a wide-area network, a virtual private network, the Internet, an intranet, an extranet, a public switched telephone network, an infrared network, a wireless network, and any combination thereof.

The computer device 1100 can include a variety of data stores and other memory and storage media as discussed above. These can reside in a variety of locations, such as on a storage medium local to (and/or resident in) one or more of the computers or remote from any or all of the computers across the network. In some implementations, information can reside in a storage-area network ("SAN") familiar to those skilled in the art. Similarly, any necessary files for performing the functions attributed to the computers, servers, or other network devices may be stored locally and/or remotely, as appropriate.

In implementations, the components of the computer device 1100 as described above need not be enclosed within a single enclosure or even located in close proximity to one another. Those skilled in the art will appreciate that the above-described componentry are examples only, as the computer device 1100 can include any type of hardware componentry, including any necessary accompanying firmware or software, for performing the disclosed implementations. The computer device 1100 can also be implemented in part or in whole by electronic circuit components or processors, such as application-specific integrated circuits (ASICs) or field-programmable gate arrays (FPGAs).

If implemented in software, the functions can be stored on or transmitted over a computer-readable medium as one or more instructions or code. Computer-readable media includes both tangible, non-transitory computer storage media and communication media including any medium that facilitates transfer of a computer program from one place to another. A storage media can be any available tangible, non-transitory media that can be accessed by a computer. By way of example, and not limitation, such tangible, non-transitory computer-readable media can comprise RAM, ROM, flash memory, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes CD, laser disc, optical disc, DVD, floppy disk and Blu-ray disc where disks usually reproduce data magnetically, while discs reproduce data optically with lasers. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Combinations of the above should also be included within the scope of computer-readable media.

While the teachings have been described with reference to examples of the implementations thereof, those skilled in the art will be able to make various modifications to the described implementations without departing from the true spirit and scope. The terms and descriptions used herein are set forth by way of illustration only and are not meant as limitations. In particular, although the processes have been described by examples, the stages of the processes can be performed in a different order than illustrated or simultaneously. Furthermore, to the extent that the terms "including", "includes", "having", "has", "with", or variants thereof are used in the detailed description, such terms are intended to be inclusive in a manner similar to the term "comprising." As used herein, the terms "one or more of" and "at least one of" with respect to a listing of items such as, for example, A and B, means A alone, B alone, or A and B. Further, unless specified otherwise, the term "set" should be interpreted as "one or more." Also, the term "couple" or "couples" is intended to mean either an indirect or direct connection. Thus, if a first device couples to a second device, that connection can be through a direct connection, or through an indirect connection via other devices, components, and connections.

## Claims

1. A method for authenticating a data message from an Internet of Things ("IoT") services container embodied by a data structure stored in a memory of a computer, the method comprising:
obtaining the data message from the IoT services container, wherein the data message is digitally signed using a private key of an IoT device that created the data message, wherein the data message includes a data message identifier and a data payload, and wherein the container is operable to provide one or more services to the IoT device through one or more application programming interfaces ("APIs");
extracting the data message identifier from the data message,
transforming the data message identifier into a device identifier;
transforming the device identifier into a qualified name;
obtaining, from a DNS record, a public key associated with the private key; and
authenticating the data message using the public key.

2. The method of claim 1, wherein the one or more services comprise a message bus service operable to receive and provide message to a requestor, a data service operable to process data received from the IoT device, a data transformer service operable to transform data from the IoT device from one state to another state, and an administrative service operable to maintain information on valid users of the data feed.

3. The method of claim 1 or 2, wherein the data message is obtained by a requestor on a predetermined schedule.

4. The method of claim 2, wherein the one or more services comprises one or more of: a registry server, a data service, a DNS server service, and a messaging service, a data transformer, a data aggregator, or a data average.

5. The method according to any of claims 1 to 4, wherein the one or more APIs comprise an account API, a crawler API, a consume API, a publish API.

6. The method of claim 5, wherein the crawler API is operable to communicate with other containers.

7. A system, the system comprising:
at least one hardware processor;
a computer-readable medium operable to store instructions, that when executed by the at least one processor, performs a method for authenticating a data message from an Internet of Things ("IoT") services container embodied by a data structure stored in a memory of a computer according to any of claims 1 to 6.

8. A non-transitory computer readable medium comprising instructions, that when executed by a processor, perform a method for authenticating a data message from an Internet of Things ("IoT") services container embodied by a data structure stored in a memory of a computer according to any of claims 1 to 6.
